**Europäisches Patentamt**

**European Patent Office**

**Office européen des brevets**

(11) Veröffentlichungsnummer: **0 001 755**

A1

# (12) EUROPÄISCHE PATENTANMELDUNG

(21) Anmeldenummer: **78101041.8**

(22) Anmeldetag: **30.09.78**

(51) Int. Cl.²: **C 03 C 7/04**
C 23 D 5/00, C 03 C 7/02

(30) Priorität: **15.10.77 DE 2746480**

(43) Veröffentlichungstag der Anmeldung:
**16.05.79 Patentblatt 79/10**

(84) Benannte Vertragsstaaten:
**BE CH DE FR GB NL SE**

(71) Anmelder: **Bayer Aktiengesellschaft
Zentralbereich Patente,Marken und Lizenzen Bayerwerk
D-5090 Leverkusen 1(DE)**

(72) Erfinder: **Wagner, Gebhard, Dr.
Ackerstrasse 31
D-5068 Odenthal(DE)**

(72) Erfinder: **Joseph,, Werner, Dr.
Ludwig-Aschoff-Strasse 20
D-5000 Köln 80(DE)**

(72) Erfinder: **Krist, Otto
Grosshurdener Berg 8
D-5063 Overath(DE)**

(54) Fluor- und aluminiumoxidfreie Grundemails für die Emaillierung von Stahlblech sowie emailliertes Stahlblech.

(57) Es werden neue fluor- und aluminiumoxidfreie Grundemailfritten zur Emaillierung von Stahlblech der folgenden Zusammensetzung beschrieben:

| | |
|---|---|
| $SiO_2$ | 30-55 Gew.-% |
| $B_2O_3$ | 15-28 Gew.-% |
| Alkalioxid | 12-21 Gew.-% |
| Erdalkalioxid | 7-20 Gew.-% |
| Zinkoxid | 0-10 Gew.-% |
| Kobaltoxid | 0-2 Gew.-% |
| Kupferoxid | 0-2 Gew.-% |
| Manganoxid | 0-6 Gew.-% |
| Eisenoxid | 0-7 Gew.-% |

**EP 0 001 755 A1**

- 1 -

BAYER AKTIENGESELLSCHAFT      5090 Leverkusen, Bayerwerk

Zentralbereich            Dp/AB
Patente, Marken und Lizenzen

Fluor- und aluminiumoxidfreie Grundemails für die
Emaillierung von Stahlblech sowie emailliertes Stahlblech

Die Erfindung betrifft fluor- und aluminiumoxidfreie Grundemails für die Emaillierung von Stahlblech.

Grundemails für Stahlblech sind üblicherweise aus Oxiden
des Siliziums, Bors und Aluminiums als Netzwerkbildner
und den Oxiden der Alkali- und Erdalkalimetalle als Netzwerkwandler sowie den Haftoxiden der Schwermetalle Kobalt,
Nickel und Kupfer aufgebaut. Außerdem enthalten sie in
der Regel Fluor. Dieses wird in Form von Flußspat oder anderen
Fluoriden über den Rohstoffversatz eingeführt. Es trägt wesentlich zur Erniedrigung der Viskosität der Emailfritten
beim Emaillierprozeß bei. Auch wird die Benetzung des beim
Emaileinbrand oxidierenden Stahlblechs gefördert.

Beim Schmelzen dieser Grundemails in flammenbeheizten Öfen
geht ein Teil des eingesetzten Fluors in den Gaszustand
über, wodurch der Einsatz von aufwendigen Abgasreinigungsanlagen zur Vermeidung von Umweltbelastungen notwendig ist. Auch beim Emaillieren mit diesen

- 2 -

Grundemails entstehen während des Einbrennvorgangs - begünstigt durch Wasserdampf - geringe Mengen flüchtiger Fluorverbindungen, die im Ofenraum selbst zu Emailfehlern führen können.

Es sind Versuche unternommen worden, Grundemails ohne fluorhaltige Rohstoffe zu erschmelzen, wobei zur Kompensation der dadurch erhöhten Viskosität der Emails der Gehalt an Boroxid und/oder der Oxide der Alkali- und/oder Erdalkalimetalle heraufgesetzt wurde. Diese Emails ergaben Schwierigkeiten bei der Verarbeitung, vor allem war die emaillierte Oberfläche schaumig. Bei längerem Stehen dieser Grundemailschlicker traten relativ rasch Alterungserscheinungen auf, wie z.B. Verflüssigung des Schlickers, die durch Nachstellen mit üblichen Stellsalzen nur vorübergehend zu beheben waren.

Vielfach waren schwarze Punkte in der Grundemailschicht zu beobachten, die durch unkontrollierte Eisenoxiddiffusion von der Stahloberfläche ausgehend bedingt waren. Auch eine nachfolgende Deckemaillierung war nicht in der Lage, die unruhige Oberfläche der Grundemaillierung zu überdecken.

Überraschenderweise wurde gefunden, daß diese Nachteile vermieden werden können, wenn neben Fluor auch Aluminiumoxid aus dem Schmelzversatz eliminiert wird. Dies ist um so überraschender, als normalerweise beim Erschmelzen von Grundemails Feldspat oder andere aluminiumoxidhaltige Rohstoffe eingesetzt werden, um die Glasstruktur zu stabilisieren und unerwünschte Alterungserscheinungen des Schlickers zu verhindern.

- 3 -

Gegenstand der vorliegenden Erfindung sind daher fluor-
und aluminiumoxidfreie Grundemailfritten zur Emaillierung
von Stahlblech enthaltend

| | |
|---|---|
| $SiO_2$ | 30-55 Gew.-% |
| $B_2O_3$ | 15-28 Gew.-% |
| Alkalioxid | 12-21 Gew.-% |
| Erdalkalioxid | 7-20 Gew.-% |
| ZnO | 0-10 Gew.-% |
| CoO | 0- 2 Gew.-% |
| NiO | 0- 2 Gew.-% |
| CuO | 0- 2 Gew.-% |
| MnO | 0- 6 Gew.-% |
| $Fe_2O_3$ | 0- 7 Gew.-% |

Bevorzugte erfindungsgemäße
Grundemailfritten enthalten:

| | |
|---|---|
| $SiO_2$ | 31-51 Gew.-% |
| $B_2O_3$ | 17-27 Gew.-% |
| Alkalioxid | 15-19 Gew.-% |
| Erdalkalioxid | 10-15 Gew.-% |
| ZnO | 0-10 Gew.-% |
| CoO | 0,5-1,5 Gew.-% |
| NiO | 0,5-1,5 Gew.-% |
| CuO | 0-1 Gew.-% |
| MnO | 0-3 Gew.-% |
| $Fe_2O_3$ | 1-5 Gew.-% |

Le A 18 878

- 4 -

Als Erdalkalioxide werden bevorzugt Calcium- und/oder Bariumoxid eingesetzt. Üblicherweise werden bei der Grundemaillierung
von Stahlblech Kombinationen von Grundemails unterschiedlichen
Aufschmelzverhaltens eingesetzt, wobei die Frittenmischung auf
die Einbrenntemperatur, Stahlblechstärke und Deckemailqualität
abgestimmt wird. Dies gilt in gleicher Weise auch für die erfindungsgemäßen fluor- und aluminiumoxidfreien Grundemails; sie
zeichnen sich durch ausgezeichnete Brennbeständigkeit, glatte
Oberfläche, gute Haftung und gute Verträglichkeit mit handelsüblichen Deckemails aus. In Fällen, in denen eine optische Wirkung der Emaillierung nicht verlangt ist, können die erfindungsgemäßen Grundemails auch ohne Deckemaillierung eingesetzt
werden.

Bei den erfindungsgemäßen Grundemails kann in bekannter
Weise durch Zusatz von titan-, zirkon- und molybdänhaltigen
Rohstoffen die Beständigkeit der Emailierung gegenüber verdünnten Säuren oder Alkalien verbessert werden.

Überraschenderweise zeigen die mit den erfindungsgemäßen Grundemails hergestellten Emailschlicker auch über einen längeren
Zeitraum konstante Verarbeitungseigenschaften.

Die Erfindung wird durch die folgenden Beispiele näher erläutert:

Le A 18 878

Beispiel 1

Aus handelsüblichen Rohstoffen, wie sie für die Emailherstellung verwendet werden, wurde bei 1200°C ein Grundemail folgender Zusammensetzung erschmolzen:

|  | Gew.-% |
|---|---|
| $SiO_2$ | 51,0 |
| $B_2O_3$ | 17,0 |
| $Na_2O$ | 12,0 |
| CaO | 10,0 |
| CoO | 0,5 |
| NiO | 1,5 |
| $Fe_2O_3$ | 5,0 |
| MnO | 3,0 |

Nach dem Abschrecken der Schmelze in Wasser und dem Trocknen der so erhaltenen Granalien wurden diese in einer Porzellankugelmühle nach folgendem Mühlenversatz so lange vermahlen, bis der Rückstand auf einem Sieb der Maschenweite 100 $\mu$m weniger als 3 % - bezogen auf den Feststoff - betrug:

| Fritte | 1.000 g |
|---|---|
| Quarzmehl | 100 g |
| Emaillierton | 75 g |
| Borax-Dekahydrat | 4 g |
| Natriumnitrit | 1 g |
| Wasser | 540 g |

Mit diesem so erhaltenen Grundemailschlicker wurden 100 x 100 mm große Stahlbleche mit einer Stärke von 1 mm, die in bekannter Weise für die Emaillierung entfettet, gebeizt und neutralisiert worden waren, in üblicher Weise durch Tauchauftrag derart beschichtet, daß die Emailschichtstärke im eingebrannten Zustand 80 bis 100 $\mu$m betrug.

Le A 18 878

- 6 -

Das in einem Labormuffelofen bei 84o°C eingebrannte emaillierte Stahlblech zeigte eine glatte, fehlerfreie Oberfläche. Die Blasenstruktur der Emaillierung war gleichmäßig, die Haftung gut. Auch nach zwei- und dreimaligem Nachbrand unter gleichen Bedingungen, der in der Praxis bei Reparatur- und Deckemaileinbrand erfolgen kann, blieb die Emaillierung fehlerfrei.

Auf die ein- oder zweimal eingebrannten emaillierten Bleche wurde durch Tauchauftrag ein Bortitanweißemailschlicker aufgetragen, wie er in der Geschirrindustrie im Einsatz ist. Die nach dem Trocknen und Einbrand bei 84o°C erhaltene Emaillierung mit einer Gesamtschichtstärke von 200 bis 220 um war glatt, glänzend, gleichmäßig hochdeckend getrübt und fehlerfrei. Die Haftung war gut. Auch nach dem zweiten Nachbrand, der in der Praxis durch Reparatur- oder Dekorbrand vorkommen kann, war die Emaillierung einwandfrei.


Beispiel 2

Aus handelsüblichen Rohstoffen, wie sie für die Emailherstellung verwendet werden, wurde bei 1150 bis 1200°C ein Grundemail folgender Zusammensetzung erschmolzen:

|  | Gew.-% |
|---|---|
| $SiO_2$ | 46,0 |
| $B_2O_3$ | 23,0 |
| $Na_2O$ | 15,0 |
| CaO | 12,0 |
| MnO | 1,0 |
| $Fe_2O_3$ | 1,0 |
| CoO | 0,5 |
| NiO | 1,0 |
| CuO | 0,5 |

Die wie in Beispiel 1 erhaltene Emailfritte wurde wie dort beschrieben zu Emailschlicker verarbeitet.

Le A 18 878

- 7 -

Die mit diesem Schlicker durch Tauchauftrag beschichteten 100 x 100 x 1 mm für die Emaillierung vorbehandelten Stahlbleche wurden nach dem Trocknen 3 Minuten bei 820°C in einem Labormuffelofen eingebrannt. Die 90 bis 110 µm dicke Emaillierung zeigte sowohl nach dem ersten als auch nach mehrmaligem Einbrand eine glatte, einwandfreie Oberfläche. Die Haftung war sehr gut.

Beispiel 3

Aus handelsüblichen Rohstoffen, wie sie für die Emailherstellung verwendet werden, wurde bei 1150 bis 1200°C ein Grundemail folgender Zusammensetzung erschmolzen:

|  | Gew.-% |
|---|---|
| $SiO_2$ | 4o,o |
| $B_2O_3$ | 21,o |
| $Na_2O$ | 17,o |
| CaO | 15,o |
| ZnO | 2,o |
| CoO | o,5 |
| NiO | 1,5 |
| $Fe_2O_3$ | 3,o |

Die wie in Beispiel 1 erhaltene Emailfritte wurde wie dort beschrieben zu Emailschlicker verarbeitet.
Die mit diesem Schlicker durch Tauchauftrag beschichteten 1oo x 1oo x 1 mm für die Emaillierung vorbehandelten Stahlbleche wurden nach dem Trocknen 3 Minuten bei 82o°C in einem Labormuffelofen eingebrannt. Die 90 bis 110 µm dicke Emaillierung zeigte sowohl nach dem ersten als auch nach mehrmaligem Einbrand eine glatte, einwandfreie Oberfläche. Die Haftung war sehr gut.

Le A 18 878

Beispiel 4

Aus handelsüblichen Rohstoffen, wie sie für die Emailherstellung verwendet werden, wurde bei 1100°C ein Grundemail folgender Zusammensetzung erschmolzen:

|  | Gew.-% |
|---|---|
| $SiO_2$ | 31,0 |
| $B_2O_3$ | 27,0 |
| $Na_2O$ | 14,0 |
| CaO | 10,0 |
| ZnO | 10,0 |
| BaO | 3,0 |
| CoO | 1,0 |
| NiO | 1,0 |
| CuO | 1,0 |
| $Fe_2O_3$ | 2,0 |

Nach dem Abschrecken der Schmelze zwischen wassergekühlten Stahlwalzen wurden die so erhaltenen Schuppen in einer Porzellankugelmühle nach folgendem Mühlenversatz so lange vermahlen, bis der Rückstand auf einem Sieb der Maschenweite 100 µm 1 % bezogen auf den Feststoff betrug.

| | |
|---|---|
| Fritte | 1000 g |
| Quarzmehl | 200 g |
| Zirkonmehl | 50 g |
| Ton | 80 g |
| Borax Dekahydrat | 4 g |
| Na-Nitrit | 1 g |
| Wasser | 570 g |

Mit diesem so erhaltenen Grundemailschlicker wurden 100 x 100 mm große Stahlbleche mit einer Stärke von 0,7 mm, die

Le A 18 878

in bekannter Weise für die Grundemaillierung vorbehandelt worden waren, durch Aufsprühen derart beschichtet, daß die Emailschichtstärke im eingebrannten Zustand 70 bis 90 µm betrug.

Das in einem Labormuffelofen bei 800°C 3 Minuten eingebrannte emaillierte Stahlblech zeigte eine seidenmatte, fehlerfreie Oberfläche mit gleichmäßiger Blasenstruktur. Die Haftung des Emails war gut. Auch nach mehrmaligem Brennen bei 800°C blieb die Emaillierung fehlerfrei.

Auf die so grundemaillierten Stahlbleche wurde durch Aufsprühen mit einer Spritzpistole ein Titanweißemailschlicker aufgetragen, wie er in einem Herdemaillierwerk im Einsatz ist.

Die nach dem Trocknen und Einbrand bei 800°C erhaltene Emaillierung in einer Gesamtschichtstärke von 170 bis 200 µm war glatt, glänzend, gleichmäßig hochdeckend getrübt und fehlerfrei. Die Emaillierung zeigte eine gute Haftung.

Beispiel 5

Die in den Beispielen 1, 2 und 3 beschriebenen Emailfritten wurden in einer Kugelmühle nach folgendem Mühlenversatz so lange vermahlen, bis der Rückstand auf einem Sieb der Maschenweite 100 µm 3 % bezogen auf den Feststoff betrug:

| | |
|---|---|
| Emailfritte nach Beispiel 1 | 40 kg |
| Emailfritte nach Beispiel 2 | 30 kg |
| Emailfritte nach Beispiel 3 | 30 kg |
| Quarzmehl | 15 kg |
| Ton | 7 kg |
| Borax Dekahydrat | 0,3 kg |
| Natriumnitrit | 0,1 kg |
| Wasser | 55 kg |

Le A 18 878

- 10 -

Mit diesem Schlicker wurden Stahlgeschirre aus 1 mm Stahlblech und einem Durchmesser von 18 cm im Tauchauftrag beschichtet. Diese so beschichteten Geschirre wurden nach dem Trocknen im Umkehrofen eines Emaillierwerkes bei einer Temperatur von $840^{o}$C in der Umkehrzone und einer Verweilzeit von etwa 7 Minuten über $800^{o}$C eingebrannt. Das Auftragsverhalten des Schlickers war so eingestellt, daß die Geschirre nach dem Einbrand eine Grundemailschichtstärke von 90 bis 110 um aufwiesen.

Auf die so grundemaillierten Geschirre wurde durch Aufspritzen ein Farbemailschlicker aufgetragen, der in üblicher Weise aus Transparentemail, Spinellfarbkörper, Schwebe-, Stellmittel und Wasser bereitet war.

Die so erhaltene Grund- und Deckemaillierung der Geschirre zeigte eine glatte, glänzende, fehlerfreie Oberfläche. Auch ein nachfolgender Dekoreinbrand ergab ein einwandfreies Ergebnis.

Patentansprüche

1. Fluor- und aluminiumoxidfreie Grundemailfritten zur Emaillierung von Stahlblech, enthaltend

| | | |
|---|---|---|
| $SiO_2$ | 3o-55 | Gew.-% |
| $B_2O_3$ | 15-28 | " |
| Alkalioxid | 12-21 | " |
| Erdalkalioxid | 7-2o | " |
| Zinkoxid | o-1o | " |
| Kobaltoxid | o- 2 | " |
| Nickeloxid | o- 2 | " |
| Kupferoxid | o- 2 | " |
| Manganoxid | o- 6 | " |
| Eisenoxid | o- 7 | " |

2. Grundemailfritten nach Anspruch 1, enthaltend

| | |
|---|---|
| $SiO_2$ | 31-51 Gew.-% |
| $B_2O_3$ | 17-27 Gew.-% |
| Alkalioxid | 15-19 Gew.-% |
| Erdalkalioxid | 10-15 Gew.-% |
| Zinkoxid | 0-10 Gew.-% |
| Kobaltoxid | 0,5-1,5 Gew.-% |
| Nickeloxid | 0,5-1,5 Gew.-% |
| Kupferoxid | 0-1 Gew.-% |
| Manganoxid | 0-3 Gew.-% |
| Eisenoxid | 1-5 Gew.-% |

3. Emailliertes Stahlblech gekennzeichnet durch eine Grundemailschicht der Zusammensetzung gemäß einem der Ansprüche 1 oder 2 und gegebenenfalls mindestens eine darüberliegende Deckemailschicht.

Le A 18 878

**Europäisches Patentamt**

**EUROPÄISCHER RECHERCHENBERICHT**

00000117555

Nummer der Anmeldung

EP 78 10 104

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 2 786 782 (H.M.ZIMMERMAN) <br> * Ansprüche 1,3,5,9; Spalte 1, Zeilen 16-22; Spalte 4, Zeilen 16-55; Spalte 5, Zeilen 40-55 * | 1, 3 |
| A | DE - A - 2 710 263 (EAGLE-PICHER INDUSTRIES) <br> * Ansprüche 1,7,11-14; Seiten 16-18 * | 1, 3 |
| A | GB - A - 811 243 (OWENS-CORNING FIBERGLASS CORP) <br> * Ansprüche 1,4; Seite 1, Zeilen 30-49; Seite 2, Zeilen 4-15, 23-29 * | 1, 2 |
| A | US - A - 2 930 713 (L.C. HOFFMAN) <br> * Anspruch 1; Spalte 4, Tabelle II * | 1, 3 |
| A | US - A - 2 842 458 (E.J. FEENEY) <br> * Ansprüche 1,2,14; Spalte 2, Zeilen 50-68 * | 1-3 |

**KLASSIFIKATION DER ANMELDUNG (Int.Cl.²)**

C 03 C 7/04
C 23 D 5/00
C 03 C 7/02

**RECHERCHIERTE SACHGEBIETE (Int. Cl.²)**

C 03 C 7/00
        7/02
        7/04
C 23 D 5/00
        5/02
C 03 C 3/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-01-1979 | SCHURMANS |

EPA form 1503.1  06.78